# EUROPEAN PATENT APPLICATION

(11) **EP 2 317 693 A1**
(43) Date of publication of application: **04.05.2011**
(21) Application number: 09807887.6
(22) Date of filing: 20.08.2009
(51) Int. Cl.: H04L 12/24

(54) **TRUSTED NETWORK MANAGEMENT METHOD BASED ON TCPA/TCG TRUSTED NETWORK CONNECTION**

(30) Priority: 21.08.2008 CN 200810150696
(71) Applicant: China Iwncomm Co., Ltd, Shaanxi 710075 (CN)
(72) Inventor: XIAO, Yuelei, Shaanxi 710075 (CN); CAO, Jun, Shaanxi 710075 (CN); LAI, Xiaolong, Shaanxi 710075 (CN); HUANG, Zhenhai, Shaanxi 710075 (CN)
(74) Representative: Epping - Hermann - Fischer
(86) International application number: PCT/CN2009/073370
(87) International publication number: WO 2010/020188

(57) **Abstract**

A trusted network management method based on TCPA/TCG trusted network connection is provided. A trusted management agent and a trusted management system are installed and configured on a managed host and a managing host respectively and verified to be creditable locally; when the managed host and the managing host have not yet connected into a trusted network, they connect into the trusted network separately by using a method based on TCPA/TCG trusted network connection and then performs authentication and key negotiation procedure between the trusted management agent and the trusted management system; when the managed host and the managing host have not yet performed the user authentication and key negotiation procedure, they perform user authentication and key negotiation procedure, then realize the remote creditability of the trusted management agent and the trusted management system, and finally, perform network management.

## Description

This application claims priority to Chinese Patent Application no. 200810150696.0, filed with the Chinese Patent Office on August 21, 2008 and entitled "Trusted Network Management Method Based on TCPA/TCG Trusted Network Connect", which is hereby incorporated by reference in its entirety.

### Field of the Invention

The present invention relates to a trusted network management method based on Trusted Computing Platform Alliance/Trusted Computing Group (TCPA/TCG) trusted network connect.

### Background of the Invention

The concept of network management has been increasingly known and identified by people along with development of the Internet. Early, the Internet involved a small number of access nodes and was simply deployed, typically in a flat structure, so it was rather simple and easy to perform management including failure detection, performance supervision, etc., on a network. However along with constant development of the network, constant emergence of new network technologies and constant innovation of network products, it becomes increasingly difficult to lay out and expand the network. Practical problems of how to make the best function of respective components of the network, how to maintain good reliability and superior efficiency of the network, etc., prompt the emergence of network management. The development of existing communication networks have following features: an increasing scale and functional complexity of the networks, gradual integration of the heterogeneous networks, etc. This trend poses an unprecedented challenge to network management. Network management involves layout, design and control of resources and devices constituting a network to enable the network with the highest efficiency and productivity, thereby serving a user efficiently.

A traditional network management system commonly adopts centralized management model, e.g., an administrator/agent model based on the Simple Network Management Protocol (SNMP), proposed by the Internet Engineering Task Force (IETF) in 1988. Along with the increasing scale of networks, drawbacks of this SNMP-based network management model are gradually revealed. For example, a management node has increasingly become a bottleneck of network management due to an increasing number of users; an excessive number of polls and widely distributed agents necessitate an excessive bandwidth overhead and degrade the efficiency; and a volume of raw data which is management information retrieved by administrator from the respective agents is transmitted such that a bandwidth is wasted and a large number of precious resources of a CPU of an administrator are consumed, thus causing inefficient management network. Furthermore, this centralized management mode is also adopted in a network management system based on Common Management Information Protocol (CMIP) somewhat more complex than the SNMP. Generally, the SNMP is applicable to management on a data network, and the CMIP is applicable to management on a telecommunication network.

In view of the foregoing problems, the network management system has increasingly been developed rapidly toward becoming distributed and intelligent. Distributed network management has been developed generally in two trends, in one of which a distributed calculation facility can be used in an existing network management framework to easily design a large distributed network management system which is open, standardized and extensible, primarily including a distributed network management system based on Common Object Request Broker Architecture (COBRA) and a Web-based distributed network management system; and in the other of which a new distributed network management is involved, e.g., a network management system based upon a mobile agent, etc. Network management tank and supervision are distributed throughout a network by distributed network management technique rather than by a separate control center, thus offering advantages of a reduced traffic of network management, a more management capability, extensibility, etc. However both the centralized and distributed network management systems suffer the following security problems:

1. A host where an agent resides may attack the agent, but the security of the agent can not be ensured in an existing detection-based method;

2. Also an agent may attack a host where the agent resides, for example, the agent attempts an illegal access to some private information of the host where the agent resides, and at present such an attack has to be passively prevented only through intrusive detection technique;

3. A network management user totally trusts an administrator system, which may be insecure because the administrator system may be controlled by a virus, a Trojan horse, etc., and will not work as intended for the network management user, thus resulting in a loss of management and control on the network; and

4. A managed host totally trusts an administrator system, which may also be out of security. The managed host has to detect the administrator system for being invaded by a virus, a Trojan horse, etc., if the detection is not performed, the managed host may be subject to a malicious behavior of an agent residing in the managed host receiving a malicious management command.

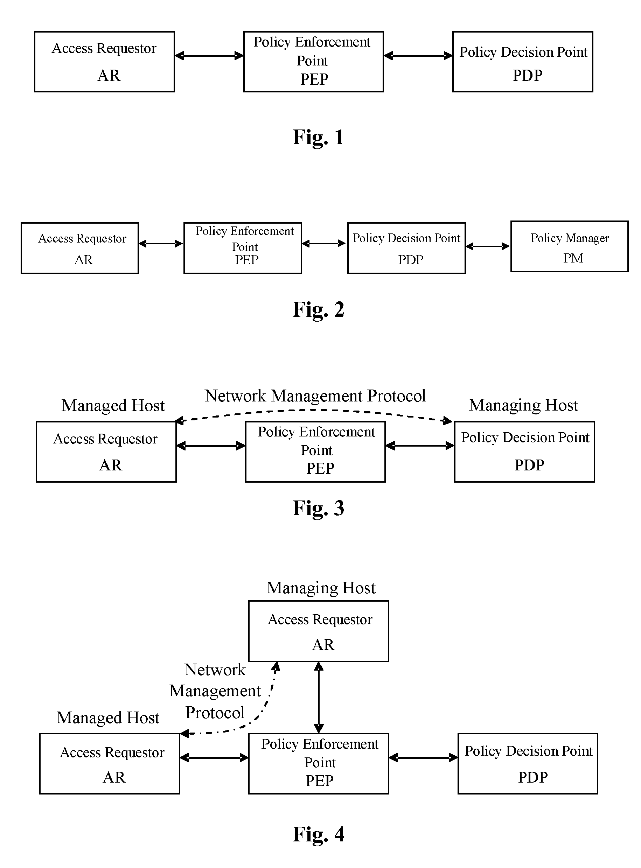

In order to ensure trustworthiness of various terminals (including a PC, a mobile phone, a mobile intelligent terminal, etc.) and trustworthiness between terminals in a network environment, the international trusted computing organization TCPA/TCG had defined a trusted computing framework and established a series of trusted computing specifications. The trusted computing framework ensures the security of the entire system generally by enhancing the security of an existing terminal architecture. A general idea thereof lies in that a trusted architecture is introduced to various terminal hardware platforms to improve the security of terminal systems due to security features thereof. A core of terminal trustworthiness is a trusted chip referred to as Trusted Platform Module (TPM). Trustworthiness of a terminal can be achieved with the trusted platform module TPM, and trustworthiness between terminals in a network environment can be achieved over a trusted network connection based upon the trusted platform module TPM. Fig.1 illustrates a trusted network connection architecture of the international trusted computing organization TCPA/TCG. In this trusted network connection architecture, a Policy Decision Point (PDP) performs user authentication and platform integrity evaluation for an Access Requestor (AR) and makes a decision from a result of user authentication and a result of platform integrity evaluation and then instructs a Policy Enforcement Point (PEP) to enforce the decision.

For enhanced security of the trusted network connection architecture, a trusted third party Policy Manager (PM) can be deployed behind the policy decision point PDP to constitute the trusted network connection architecture with enhanced security as illustrated in Fig.2. The access requestor AR, the policy decision point PDP and the policy manager performs a tri-element peer authentication protocol to perform mutual user authentication and mutual platform integrity evaluation between the access requestor AR and the policy decision point PDP, where the policy manager PM verify the validity of certificates of the access requestor AR and the policy decision point PDP and also can check platform integrity of the access requestor AR and the policy decision point PDP. The policy decision point PDP makes a decision from the results of user authentication and platform integrity evaluation and then instructs the policy enforcement point PEP to enforce the decision. The access requestor AR can also make a decision from the results of user authentication and platform integrity evaluation and enforce the decision locally.

A trusted network connection performed over the trusted network connection architecture illustrated in Fig.1 is referred to a "TCPA/TCG trusted network connection", and a trusted network connection performed over the trusted network connection architecture illustrated in Fig.2 is referred to as a "TCPA/TCG trusted network connection with enhanced security". In the trusted network connection architectures illustrated in Fig.1 and Fig.2, after connected to the trusted network, the access requestor AR has to be managed by a network management system while the foregoing security drawbacks of the centralized and distributed network management systems needs to obviate to thereby build an indeed operational trusted network. As can apparent from Fig.1 and Fig.2, finally user authentication and platform integrity evaluation between the access requestor AR and the policy decision point PDP are performed and the policy enforcement point PEP enforces the decision of the policy decision point PDP in both of the trusted network connection architectures, so trusted network management methods based on the two trusted network connection architectures are identical and referred collectively to as a "trusted network management method based on TCPA/TCG trusted network connection".

### Summary of the Invention

The invention provides a trusted network management method based on TCPA/TCG trusted network connection to address the foregoing technical problems in the prior art.

A technical solution of the invention provides a trusted network management method based on TCPA/TCG trusted network connection, which includes:
installing and configuring a trusted management agent and a trusted management system, wherein the trusted management agent resides in a managed host, the trusted management system resides in a managing host which is a host assuming the role of a policy decision point PDP;
implementing local trustworthiness of the trusted management agent and the trusted management system;
if the managed host has not been connected into a trusted network, then connecting the managed host to the trusted network in such a way that in the case of a TCPA/TCG trusted network connection architecture, the managed host is connected into the trusted network over a TCPA/TCG trusted network connection and assumes the role of an access requestor AR, or in the case of a TCPA/TCG trusted network connection architecture with enhanced security, the managed host is connected into the trusted network over a TCPA/TCG trusted network connection with enhanced security and assumes the role of an access requestor AR;
if the managed host has been connected into the trusted network, then performing authentication and key negotiation of the trusted management agent and the trusted management system;
if the trusted management agent and the trusted management system have not been verified for remote trustworthiness, then implementing, by the managed host and the managing host before performing network management, remote trustworthiness of the trusted management agent and the trusted management system in such a way that in the case of the TCPA/TCG trusted network connection architecture, the managed host checks integrity of the trusted management system on the managing host according to a locally pre-stored standard integrity value of the trusted management system, and the managing host checks integrity of the trusted management agent on the managed host according to a locally pre-stored standard integrity value of the trusted management agent, or in the case of the TCPA/TCG trusted network connection architecture with enhanced security, the managed host, the managing host and a policy manager PM perform a tri-element peer authentication protocol to implement remote trustworthiness of the trusted management agent and the trusted management system, wherein the policy manager is responsible for checking integrity of the trusted management agent and the trusted management system and transmits a check result to the managed host and the managing host; and
if the trusted management agent and the trusted management system have been verified for remote trustworthiness, then directly performing network management.

The trusted management agent is installed and configured by a network administrator, or by a network user when a configuration file is distributed by the network administrator and includes contents unknowable to the network user.

A network user of the managed host measures, stores and reports integrity of the trusted management agent through a trusted platform module TPM in the managed host to thereby verify trustworthiness of the trusted management agent on the managed host, and a network administrator of the managing host measures, stores and reports integrity of the trusted management system through a trusted platform module TPM in the managing host to thereby verify trustworthiness of the local trusted management system.

Authentication and key negotiation of the trusted management agent and the trusted management system includes: transmitting, by the trusted management agent on the managed host automatically, information probing the corresponding trusted management system; starting, by the trusted management system, authentication with the trusted management agent upon reception of the probe information from the trusted management agent; and performing, by the trusted management system and the trusted management agent, mutual authentication and key negotiation using configuration information or a configuration file to obtain a session key between the trusted management agent and the trusted management system so as to secure communication between the trusted management agent and the trusted management system.

During network management, if a network user of the managed host confirms through verification that both the trusted management system operating on the managing host and the trusted management agent operating on the managed host are trustworthy, then the network user of the managed host permits network management communication of the managed host and the managing host, or if a network administrator of the managing host confirms through verification that both the trusted management system operating on the managing host and the trusted management agent operating on the managed host are trustworthy, then the network administrator of the managing host begins to perform network management.

A trusted network management method based on TCPA/TCG trusted network connection includes:
installing and configuring a trusted management agent and a trusted management system, wherein the trusted management agent resides in a managed host and the trusted management system resides in a managing host which is a host assuming the role of an access requestor AR;
implementing local trustworthiness of the trusted management agent and the trusted management system;
if the managed host and the managing host have not been connected into a trusted network, then connecting the managed host and the managing host to the trusted network in such a way that in the case of a TCPA/TCG trusted network connection architecture, the managed host and the managing host are connected into the trusted network over a TCPA/TCG trusted network connection and assume the role of an access requestor AR, or in the case of a TCPA/TCG trusted network connection architecture with enhanced security, the managed host and the managing host are connected into the trusted network over a TCPA/TCG trusted network connection with enhanced security and assume the role of an access requestor AR;
if the managed host has been connected into the trusted network, then performing authentication and key negotiation of the trusted management agent and the trusted management system;
if user authentication and key negotiation has not been performed between the managed host and the managing host, then performing, by the managed host and the managing host, user authentication and key negotiation and then performing network management; otherwise, implementing, by the managed host and the managing host before performing network management, remote trustworthiness of the trusted management agent and the trusted management system in such a way that in the case of a TCPA/TCG trusted network connection architecture, the managed host checks integrity of the trusted management system on the managing host according to a locally pre-stored standard integrity value of the trusted management system, and the managing host checks integrity of the trusted management agent on the managed host according to a locally pre-stored standard integrity value of the trusted management agent, or in the case of the TCPA/TCG trusted network connection architecture with enhanced security, the managed host, the managing host and a policy manager PM perform a tri-element peer authentication protocol to implement remote trustworthiness of the trusted management agent and the trusted management system, wherein the policy manager is responsible for checking integrity of the trusted management agent and the trusted management system and transmits a check result to the managed host and the managing host.

The trusted management agent is installed and configured by a network administrator, or by a network user when a configuration file is distributed from the network administrator and includes contents unknowable to the network user.

The network user of the managed host measures, stores and reports integrity of the trusted management agent through a trusted platform module TPM in the managed host to thereby verify trustworthiness of the trusted management agent on the managed host, and the network administrator of the managing host measures, stores and reports of integrity of the trusted management system through a trusted platform module TPM in the managing host to thereby verify trustworthiness of the local trusted management system.

Authentication and key negotiation of the trusted management agent and the trusted management system includes: transmitting, by the trusted management agent on the managed host automatically, information probing the corresponding trusted management system; starting, by the trusted management system, authentication with the trusted management agent upon reception of the probe information from the trusted management agent; and performing, by the trusted management system and the trusted management agent, mutual authentication and key negotiation using configuration information or a configuration file to obtain a session key between the trusted management agent and the trusted management system.

During network management, if a network user of the managed host confirms through verification that both the trusted management system operating on the managing host and the trusted management agent operating on the managed host are trustworthy, then the network user of the managed host permits network management communication of the managed host and the managing host, or if a network administrator of the managing host confirms through verification that both the trusted management system operating on the managing host and the trusted management agent operating on the managed host are trustworthy, then the network administrator of the managing host begins to perform network management.

The invention provides two trusted network management architectures based on TCAP/TCG trusted network connection, where a trusted management agent resides in a managed host and a trusted management system resides in a managing host; both the managed host and the managing host are provided with respective trusted platform modules TPM to thereby constitute respective trusted computing platforms through the trusted platform modules TPM; and both the trusted management agent and the trusted management system are software modules which are signed after being authenticated by a trusted third party of the trusted management agent and the trusted management system over the trusted computing platforms, and standard integrity measurement values thereof are stored after they are signed by the trusted third party. The trusted platform modules TPM of the managed host and the managing host can measure, store and report integrity of the trusted management agent and the trusted management system. With these functions of the trusted platform modules TPM, the managed host and the managing host can ensure trustworthiness of both the trusted management agent and the trusted management system, which in turn perform a function of network management to thereby achieve trusted network management. In a first trusted network management architecture, the managed host assumes the role of an access requestor AR and the managing host assumes the role of a policy decision point PDP in a TCPA/TCG trusted network connection architecture or in a TCPA/TCG trusted network connection architecture with enhanced security. In a second trusted network management architecture, both the managed host and the managing host assume the role of an access requestor AR in a TCPA/TCG trusted network connection architecture or in a TCPA/TCG trusted network connection architecture with enhanced security. Both of the trusted network management methods based on TCAP/TCG trusted network connection offer the following advantages:

1. The managed host and the managing host implement local trustworthiness of the trusted management agent and the trusted management system through the local trusted platform modules TPM to thereby prevent actively the trusted management agent from attempting an attack behavior to the managed host and ensure that the trusted management system on the managing host performs an intended function.

2. The managed host and the managing host implement remote trustworthiness of the trusted management agent and the trusted management system through the remote trusted platform modules TPM to thereby prevent any hostile managed host from attempting a hostile attack to the trusted management agent residing on the host and to ensure that the trusted management system operating thereon is controllable and further that the trusted management system is normally executing a management command of the network administrator.

3. For the first trusted network management based on TCPA/TCG trusted network connection, the steps of performing trusted network management are simplified because the managing host where the trusted management system resides assumes directly the role of a policy decision point PDP over the trusted network connection.

4. For the second trusted network management based on TCPA/TCG trusted network connection, the managed host and the managing host perform mutual user authentication, session key negotiation and mutual platform integrity evaluation respectively with the policy decision point PDP during the trusted network connection, so that mutual user authentication and key negotiation between the managed host and the managing host can be performed in a mutual authentication protocol based upon a trusted third party, and remote trustworthiness verification of the trusted management agent and the trusted management system can also be performed in a mutual trustworthiness evaluation protocol based upon a trusted third party, thereby improving the security of trusted network management.

5. Trusted management agents residing in respective managed hosts can control the managed hosts, and the trusted management system residing in a managing host can manage and control all of managing hosts, thereby performing trusted network management with distributed control and centralized management.

### Brief Description of the Drawings

Fig.1 is a diagram illustrating a TCPA/TCG trusted network connection architecture;

Fig.2 is a diagram illustrating a TCPA/TCG trusted network connection architecture with enhanced security;

Fig.3 is a diagram illustrating a trusted network management architecture based on TCPA/TCG trusted network connection according to a first embodiment of the invention; and

Fig.4 is a diagram illustrating a trusted network management architecture based on TCPA/TCG trusted network connection according to a second embodiment of the invention

### Detailed Description of the Invention

The invention will be further detailed hereinafter in embodiments thereof to make the objects, aspects and advantages of the invention more apparent.

Referring to Fig.3, a trusted network management method based on TCPA/TCG trusted network connection according to a first embodiment of the invention is performed particularly in the following steps:

1. installing and configuring both a trusted management agent and a trusted management system

Both the trusted management agent residing in a managed host and the trusted management system residing in a managing host are installed and configured, and the managing host is a host acting as a policy decision point PDP. The trusted management system is installed and configured by a network administrator, and the trusted management agent can be installed and configured by the network administrator or a network user. When the trusted management agent is installed and configured by the network user, a configuration file must be distributed by the network administrator and include contents unknowable to the network user. Furthermore, the configuration of the trusted management agent and the trusted management system can alternatively be preinstalled by the manufacturer.

2. implementing local trustworthiness of the trusted management agent and the trusted management system

The network user of the managed host can measure, store and report integrity of the trusted management agent through a trusted platform module TPM in the managed host to thereby verify trustworthiness of the trusted management agent on the managed host. Alike, the network administrator of the managing host can measure, store and report integrity of the trusted management system through a trusted platform module TPM in the managing host to thereby verify trustworthiness of the local trusted management system.

3. connecting the managed host into a trusted network

This step is an optional step. Specifically, if the managed host has not been connected into the trusted network, then the managed host is connected into the trusted network and subsequently the step 4) is performed; otherwise, the step 4) is performed directly;

The managed host is connected to the trusted network in such a way that in the case of a TCPA/TCG trusted network connection architecture, the managed host is connected into the trusted network over a TCPA/TCG trusted network connection and assumes the role of an access requestor AR, or in the case of a TCPA/TCG trusted network connection architecture with enhanced security, the managed host is connected into the trusted network over a TCPA/TCG trusted network connection with enhanced security and assumes the role of an access requestor AR.

4. Authentication and key negotiation of the trusted management agent and the trusted management system

The trusted management agent is a software module which operates automatically when the system of the managed host is started. The trusted management agent on the managed host transmits automatically information probing the corresponding trusted management system; the trusted management system starts authentication with the trusted management agent upon reception of the probe information from the trusted management agent; and the trusted management system and the trusted management agent perform mutual authentication and key negotiation using configuration information preinstalled by the manufacturer or preset upon installment by the network administrator or the configuration file distributed by the network administrator to obtain a session key between the trusted management agent and the trusted management system so as to secure communication between the trusted management agent and the trusted management system.

5. implementing remote trustworthiness of the trusted management agent and the trusted management system

This is step is an optional step. Specifically, if remote trustworthiness of the trusted management agent and the trusted management system have been verified in the step 3), then the step 6) is performed; otherwise, the managed host and the managing host firstly implement remote trustworthiness of the trusted management agent and the trusted management system and then perform the step 6);

The managed host and the managing host implement remote trustworthiness of the trusted management agent and the trusted management system in such a way that in the case of a TCPA/TCG trusted network connection architecture, the managed host checks integrity of the trusted management system on the managing host according to a locally pre-stored standard integrity value of the trusted management system, and the managing host checks integrity of the trusted management agent on the managed host according to a locally pre-stored standard integrity value of the trusted management agent, or in the case of a TCPA/TCG trusted network connection architecture with enhanced security, the managed host, the managing host and a policy manager PM perform a tri-element peer authentication protocol to implement remote trustworthiness of the trusted management agent and the trusted management system, where the policy manager is responsible for checking integrity of the trusted management agent and the trusted management system and transmits a check result to the managed host and the managing host.

Integrity of the trusted management agent is measured, stored and reported through the trusted platform module TPM on the managed host to thereby verify trustworthiness of the trusted management agent on the managed host so as to prevent any hostile managed host from attempting a hostile attack to the trusted management agent residing in the host; and integrity of the trusted management system is measured, stored and reported through the trusted platform module TPM on the managing host to thereby verify trustworthiness of the trusted management system on the managing host so as to ensure that the trusted platform module TPM operating on the managing host is controllable and properly executing a management command of the network administrator.

6. performing network management

When the network user of the managed host confirms through verification that both the trusted management system operating on the managing host and the trusted management agent operating on the managed host are trustworthy, then the network user of the managed host permits network management communication of the managed host and the managing host.

When the network administrator of the managing host confirms through verification that both the trusted management system operating on the managing host and the trusted management agent operating on the managed host are trustworthy, then the network administrator of the managing host begins to perform network management. Network management modes can include centralized network management, distributed network management, distributed control and centralized management network management, etc.

Referring to Fig.4, a trusted network management method based on TCPA/TCG trusted network connection according to a second embodiment of the invention is performed particularly in the following steps:

1. installing and configuring both a trusted management agent and a trusted management system

Both the trusted management agent residing in a managed host and the trusted management system residing in a managing host are installed and configured, and the managing host is a host acting as an access requestor AR. The trusted management system is installed and configured by a network administrator, and the trusted management agent can be installed and configured by the network administrator or a network user. When the trusted management agent is installed and configured by the network user, a configuration file must be distributed by the network administrator and include contents unknowable to the network user. Furthermore, the configuration of the trusted management agent and the trusted management system can alternatively be preinstalled by the manufacturer.

2. implementing local trustworthiness of the trusted management agent and the trusted management system

The network user of the managed host can measure, store and report integrity of the trusted management agent through a trusted platform module TPM in the managed host to thereby verify trustworthiness of the trusted management agent on the managed host. Alike, the network administrator of the managing host can measure, store and report integrity of the trusted management system through a trusted platform module TPM in the managing host to thereby verify trustworthiness of the local trusted management system.

3. connecting both the managed host and the managing host into a trusted network

This step is an optional step. Specifically, if the managed host and the managing host have not been connected into the trusted network, then the managed host and the managing host are connected into the trusted network and subsequently the step 4) is performed; otherwise, the step 4) is performed directly;

The managed host and the managing host are connected to the trusted network in such a way that in the case of a TCPA/TCG trusted network connection architecture, the managed host and the managing host are connected into the trusted network over a TCPA/TCG trusted network connection and assume the role of an access requestor AR, or in the case of a TCPA/TCG trusted network connection architecture with enhanced security, the managed host and the managing host are connected into the trusted network over a TCPA/TCG trusted network connection with enhanced security and assumes the role of an access requestor AR.

4. Authentication and key negotiation of the trusted management agent and the trusted management system

The trusted management agent is a software module which operates automatically when the system of the managed host is started. The trusted management agent on the managed host transmits automatically information probing the corresponding trusted management system; the trusted management system starts authentication with the trusted management agent upon reception of the probe information from the trusted management agent; and the trusted management system and the trusted management agent perform mutual authentication and key negotiation using configuration information preinstalled by the manufacturer or preset upon installment by the network administrator or the configuration file distributed by the network administrator to obtain a session key between the trusted management agent and the trusted management system so as to secure communication between the trusted management agent and the trusted management system.

5. User authentication and key negotiation of the managed host and the managing host

This step is an optional step. Specifically, if user authentication and key negotiation has not been performed between the managed host and the managing host, then the managed host and the managing host perform user authentication and key negotiation and then perform the step 6), the session key resulting from negotiation can be used to secure data transmission of remote integrity evaluation on the trusted management agent and the trusted management system; otherwise, the step 6) is performed directly.

6. implementing remote trustworthiness of the trusted management agent and the trusted management system

The managed host and the managing host implement remote trustworthiness of the trusted management agent and the trusted management system in such a way that in the case of a TCPA/TCG trusted network connection architecture, the managed host checks integrity of the trusted management system on the managing host according to a locally pre-stored standard integrity value of the trusted management system, and the managing host checks integrity of the trusted management agent on the managed host according to a locally pre-stored standard integrity value of the trusted management agent, or in the case of a TCPA/TCG trusted network connection architecture with enhanced security, the managed host, the managing host and a policy manager PM perform a tri-element peer authentication protocol to implement remote trustworthiness of the trusted management agent and the trusted management system, where the policy manager is responsible for checking integrity of the trusted management agent and the trusted management system and transmits a check result to the managed host and the managing host.

Integrity of the trusted management agent is measured, stored and reported through the trusted platform module TPM on the managed host to thereby verify trustworthiness of the trusted management agent on the managed host so as to prevent any hostile managed host from attempting a hostile attack to the trusted management agent residing in the host; and integrity of the trusted management system is measured, stored and reported through the trusted platform module TPM on the managing host to thereby verify trustworthiness of the trusted management system on the managing host so as to ensure that the trusted platform module TPM operating on the managing host is controllable and properly executes a management command of the network administrator.

7. performing network management

When the network user of the managed host confirms through verification that both the trusted management system operating on the managing host and the trusted management agent operating on the managed host are trustworthy, then the network user of the managed host permits network management communication of the managed host and the managing host.

When the network administrator of the managing host confirms through verification that both the trusted management system operating on the managing host and the trusted management agent operating on the managed host are trustworthy, then the network administrator of the managing host begins to perform network management. Network management modes can include centralized network management, distributed network management, distributed control and centralized management network management, etc.

Among the foregoing network management modes, the network management mode of distributed control and centralized management is more applicable to trusted network management and particular implementation thereof is that the network administrator uses the session key between the trusted management system and the trusted management agent for transmission of a secure network management policy to the trusted management agent on the managed host, and the trusted management agent performs supervision and control functions on the managed host under the secure network management policy to directly control and manage supervision data that can be affirmed under the secure network management policy but transmit supervision data that can not be affirmed under the secure network management policy to the trusted management system. The trusted management system firstly analyzes the supervision data upon reception thereof and then transmits an analysis result to the network administrator, and the network administrator controls and manages the managed host in response to the analysis result to thereby finally perform trusted network management. Suspicious data refers to data that can not be affirmed from a supervision result. The trusted management system residing in a managing host controls and manages all of managing hosts to thereby perform trusted network management with distributed control and centralized management. Distributed control primarily lies in that each host is provided with a trusted management agent which performs supervision and control under a secure network management policy transmitted from the trusted management system and hands only some data that can not be affirmed to the trusted management system for control. Centralized management primarily lies in that only a host is installed with a trusted management system which formulates a secure network management policy and then distributes them to respective trusted management agents for enforcement and which controls only data that can not be controlled and managed by the trusted management agents to thereby perform centralized management.

The invention provides two trusted network management architectures based on TCAP/TCG trusted network connection, where a trusted management agent resides in a managed host and a trusted management system resides in a managing host; both the managed host and the managing host are provided with respective trusted platform modules TPM to thereby constitute respective trusted computing platforms through the trusted platform modules TPM; and both the trusted management agent and the trusted management system are software modules which are signed after being authenticated by a trusted third party of the trusted management agent and the trusted management system over the trusted computing platforms, and their standard integrity metric values are stored after they are signed by the trusted third party. The trusted platform modules TPM of the managed host and the managing host can measure, store and report integrity of the trusted management agent and the trusted management system. With these functions of the trusted platform modules TPM, the managed host and the managing host can ensure trustworthiness of both the trusted management agent and the trusted management system, which in turn perform a function of network management to thereby achieve trusted network management. In a first trusted network management architecture, the managed host assumes the role of an access requestor AR and the managing host assumes the role of a policy decision point PDP in a TCPA/TCG trusted network connection architecture or in a TCPA/TCG trusted network connection architecture with enhanced security. In a second trusted network management architecture, both the managed host and the managing host assume the role of an access requestor AR in a TCPA/TCG trusted network connection architecture or in a TCPA/TCG trusted network connection architecture with enhanced security. Both of the trusted network management methods based on TCAP/TCG trusted network connection offer the following advantages:

1. The managed host and the managing host achieve local trustworthiness of the trusted management agent and the trusted management system through the local trusted platform modules TPM to thereby prevent actively the trusted management agent from attempting an attack behavior to the managed host and ensure that the trusted management system on the managing host performs an intended function.

2. The managed host and the managing host achieve remote trustworthiness of the trusted management agent and the trusted management system through the remote trusted platform modules TPM to thereby prevent any hostile managed host from attempting a hostile attack to the trusted management agent residing on the host and to ensure that the trusted management system operating thereon is controllable and further that the trusted management system properly executes a management command of the network administrator.

3. For the first trusted network management based on TCPA/TCG trusted network connection, the steps of performing trusted network management are simplified because the managing host where the trusted management system resides assumes directly the role of a policy decision point PDP over the trusted network connection.

4. For the second trusted network management based on TCPA/TCG trusted network connection, the managed host and the managing host perform mutual user authentication, session key negotiation and mutual platform integrity evaluation respectively with the policy decision point PDP over the trusted network connection, so that mutual user authentication and key negotiation between the managed host and the managing host can be implemented in a mutual authentication protocol based upon a trusted third party, and remote trustworthiness verification of the trusted management agent and the trusted management system can also be implemented in a mutual trustworthiness evaluation protocol based upon the trusted third party, thereby improving the security of trusted network management.

5. Trusted management agents residing in respective managed hosts can control the managed hosts, and the trusted management system residing in a managing host can manage and control all of managing hosts, thereby performing trusted network management with distributed control and centralized management.

The trusted network management methods based on TCPA/TCG trusted network connection according to the invention have been detailed as above, the principle and embodiments of the invention have been set forth in this context in specific examples, and the foregoing description of the embodiments is merely intended to facilitate understanding of the method according to the invention and the essence thereof; and also those ordinarily skilled in the art can make modifications in the embodiments and application scope in light of the spirit of the invention. In summary, the disclosure of the invention shall not be constructed in any sense of limiting the scope of the invention.

## Claims

1. A trusted network management method based on TCPA/TCG trusted network connection, comprising:
installing and configuring a trusted management agent and a trusted management system, wherein the trusted management agent resides in a managed host and the trusted management system resides in a managing host which is a host assuming the role of a policy decision point PDP;
implementing local trustworthiness of the trusted management agent and the trusted management system;
if the managed host has not been connected into a trusted network, then connecting the managed host to the trusted network in such a way that in the case of a TCPA/TCG trusted network connection architecture, the managed host is connected into the trusted network over a TCPA/TCG trusted network connection and assumes the role of an access requestor AR, or in the case of a TCPA/TCG trusted network connection architecture with enhanced security, the managed host is connected into the trusted network over a TCPA/TCG trusted network connection with enhanced security and assumes the role of an access requestor AR;
if the managed host has been connected into the trusted network, then performing authentication and key negotiation of the trusted management agent and the trusted management system;
if the trusted management agent and the trusted management system have not been verified for remote trustworthiness, then implementing, by the managed host and the managing host before performing network management, remote trustworthiness of the trusted management agent and the trusted management system in such a way that in the case of the TCPA/TCG trusted network connection architecture, the managed host checks integrity of the trusted management system on the managing host according to a locally pre-stored standard integrity value of the trusted management system, and the managing host checks integrity of the trusted management agent on the managed host according to a locally pre-stored standard integrity value of the trusted management agent, or in the case of a TCPA/TCG trusted network connection architecture with enhanced security, the managed host, the managing host and a policy manager PM perform a tri-element peer authentication protocol to implement remote trustworthiness of the trusted management agent and the trusted management system, wherein the policy manager is responsible for checking integrity of the trusted management agent and the trusted management system and transmits a check result to the managed host and the managing host; and
if the trusted management agent and the trusted management system have been verified for remote trustworthiness, then directly performing network management.

2. The trusted network management method based on TCPA/TCG trusted network connection according to claim 1, wherein the trusted management agent is installed and configured by a network administrator, or by a network user when a configuration file is distributed by the network administrator and includes contents unknowable to the network user.

3. The trusted network management method based on TCPA/TCG trusted network connection according to claim 1, wherein a network user of the managed host measures, stores and reports integrity of the trusted management agent through a trusted platform module TPM in the managed host to thereby verify trustworthiness of the trusted management agent on the managed host, and a network administrator of the managing host measures, stores and reports integrity of the trusted management system through a trusted platform module TPM in the managing host to thereby verify trustworthiness of the local trusted management system.

4. The trusted network management method based on TCPA/TCG trusted network connection according to claim 1, wherein authentication and key negotiation of the trusted management agent and the trusted management system comprises:
transmitting, by the trusted management agent on the managed host automatically, information probing the corresponding trusted management system;
starting, by the trusted management system, authentication with the trusted management agent upon reception of the probe information from the trusted management agent; and
performing, by the trusted management system and the trusted management agent, mutual authentication and key negotiation using configuration information or a configuration file to obtain a session key between the trusted management agent and the trusted management system so as to secure communication between the trusted management agent and the trusted management system.

5. The trusted network management method based on TCPA/TCG trusted network connection according to claim 1, wherein during network management, if a network user of the managed host confirms through verification that both the trusted management system operating on the managing host and the trusted management agent operating on the managed host are trustworthy, then the network user of the managed host permits network management communication of the managed host and the managing host, or if a network administrator of the managing host confirms through verification that both the trusted management system operating on the managing host and the trusted management agent operating on the managed host are trustworthy, then the network administrator of the managing host begins to perform network management.

6. A trusted network management method based on TCPA/TCG trusted network connection, comprising:
installing and configuring a trusted management agent and a trusted management system, wherein the trusted management agent resides in a managed host and the trusted management system resides in a managing host which is a host assuming the role of an access requestor AR;
implementing local trustworthiness of the trusted management agent and the trusted management system;
if the managed host and the managing host have not been connected into a trusted network, then connecting the managed host and the managing host to the trusted network in such a way that in the case of a TCPA/TCG trusted network connection architecture, the managed host and the managing host are connected into the trusted network over a TCPA/TCG trusted network connection and assume the role of an access requestor AR, or in the case of a TCPA/TCG trusted network connection architecture with enhanced security, the managed host and the managing host are connected into the trusted network over a TCPA/TCG trusted network connection with enhanced security and assume the role of an access requestor AR;
if the managed host has been connected into the trusted network, then performing authentication and key negotiation of the trusted management agent and the trusted management system;
if user authentication and key negotiation has not been performed between the managed host and the managing host, then performing, by the managed host and the managing host, user authentication and key negotiation and then performing network management; otherwise, implementing, by the managed host and the managing host before performing network management, remote trustworthiness of the trusted management agent and the trusted management system in such a way that in the case of a TCPA/TCG trusted network connection architecture, the managed host checks integrity of the trusted management system on the managing host according to a locally pre-stored standard integrity value of the trusted management system, and the managing host checks integrity of the trusted management agent on the managed host according to a locally pre-stored standard integrity value of the trusted management agent, or in the case of a TCPA/TCG trusted network connection architecture with enhanced security, the managed host, the managing host and a policy manager PM perform a tri-element peer authentication protocol to implement remote trustworthiness of the trusted management agent and the trusted management system, wherein the policy manager is responsible for checking integrity of the trusted management agent and the trusted management system and transmits a check result to the managed host and the managing host.

7. The trusted network management method based on TCPA/TCG trusted network connection according to claim 6, wherein the trusted management agent is installed and configured by a network administrator, or by a network user when a configuration file is distributed from the network administrator and includes contents unknowable to the network user.

8. The trusted network management method based on TCPA/TCG trusted network connection according to claim 6, wherein a network user of the managed host measures, stores and reports integrity of the trusted management agent through a trusted platform module TPM in the managed host to thereby verify trustworthiness of the trusted management agent on the managed host, and a network administrator of the managing host measures, stores and reports integrity of the trusted management system through a trusted platform module TPM in the managing host to thereby verify trustworthiness of the local trusted management system.

9. The trusted network management method based on TCPA/TCG trusted network connection according to claim 6, wherein authentication and key negotiation of the trusted management agent and the trusted management system comprises:
transmitting, by the trusted management agent on the managed host automatically, information probing the corresponding trusted management system;
starting, by the trusted management system, authentication with the trusted management agent upon reception of the probe information from the trusted management agent; and
performing, by the trusted management system and the trusted management agent, mutual authentication and key negotiation using configuration information or a configuration file to obtain a session key between the trusted management agent and the trusted management system.

10. The trusted network management method based on TCPA/TCG trusted network connection according to claim 6, wherein during network management, if a network user of the managed host confirms through verification that both the trusted management system operating on the managing host and the trusted management agent operating on the managed host are trustworthy, then the network user of the managed host permits network management communication of the managed host and the managing host, or if a network administrator of the managing host confirms through verification that both the trusted management system operating on the managing host and the trusted management agent operating on the managed host are trustworthy, then the network administrator of the managing host begins to perform network management.
